# EUROPEAN PATENT APPLICATION

(11) **EP 2 557 843 A1**
(43) Date of publication of application: **13.02.2013**
(21) Application number: 11360039.9
(22) Date of filing: 12.08.2011
(51) Int. Cl.: H04W 36/00

(54) **Network node configuration**

(71) Applicant: Alcatel Lucent, 75007 Paris (FR)
(72) Inventor: Wong, Shin Horng, Chippenham Wiltshire SN14 0SP (GB); Puddle, Nicola, Swindon Wiltshire SN4 0ND (GB)
(74) Representative: Script IP Limited

(57) **Abstract**

A method of configuring network nodes to facilitate handover in a multi-point wireless communications network comprising a plurality of network access nodes operable to support radio cells to enable radio communication with user equipment. A network control node, network access node, user equipment and computer program products operable to assist in implementation of that method. The method comprises: determining that an identified radio cell supported by a network access node meets predetermined criteria to be added to a user equipment active set; adding said identified radio cell to said user equipment active set; and instructing preconfiguration of said user equipment and said network access node supporting said identified radio cell to operate with said identified radio cell as a serving cell; instructing preconfiguration of said user equipment and said network access node supporting said identified radio cell to operate with said identified radio cell as a secondary serving cell. Such a method can assist fast changes to a secondary carrier in a MP-HSDPA capable network via HS-SCCH orders. Furthermore MP-HSDPA may be rapidly enabled during ESSC handover.

## Description

### FIELD OF THE INVENTION

The present invention relates to a method of configuring network nodes to facilitate handover in a multi-point wireless communications network, a network access node, network control node and user equipment operable to carry out that method, and a computer program product operable to carry out that method.

### BACKGROUND

Wireless telecommunications systems are known. In a cellular system, radio coverage is provided to user equipment, for example, mobile telephones, in areas known as cells. A base station is located in each cell to provide radio coverage. User equipment in each cell receives information and data from a base station and transmits information and data to the base station.

Information and data transmitted by a base station to the user equipment typically occurs on channels of radio carriers known as "downlink" carriers. Information and data transmitted by user equipment to a base station occurs on uplink data channels of radio carriers known as "uplink" carriers.

Multi-carrier networks, for example, dual cell high speed downlink packet access networks (DC-HSDPA) enable user equipment to receive from two carriers or two cells at the same time, thereby potentially doubling a data traffic throughput. In multi-carrier systems such as DC-HSDPA the carriers are transmitted from the same base station (or node B) and each carrier is a different frequency carrier.

Other multi-carrier systems are known, for example, 4C-HSDPA and 8C-HSDPA. Such multi-carrier systems may also be known as multi-cell HSDPA (MC-HSDPA). It has been appreciated that it is also possible to provide multi point high speed downlink packet access networks (MP-HSDPA) similar to MC-HSDPA. User equipment operating in an MP-HSDPA system is operable to receive two or more carriers at the same time. However, unlike MC-HSDPA, the carriers in MP-HSDPA may come from different base stations or node Bs, and the carriers may be transmitted using exactly the same frequency.

In MC-HSDPA and MP-HSDPA, user equipment is considered to operate using a primary carrier and one or more secondary carriers. The primary carrier contains essential control channels and typically cannot be deactivated. In contrast, any of the secondary carriers can be deactivated by a base station using a high speed shared control channel order (HS-SCCH order). Primary and secondary carriers in a multi point HSDPA system may originate from different base stations.

In multi point HSDPA, the primary carrier is transmitted by a serving base station supporting a serving cell. The secondary carrier is transmitted by a non-serving cell and is known as the secondary serving cell. It will be appreciated that the primary and secondary serving cells may be supported by the same or different base stations.

Multi point HSDPA networks offer potential data throughput increases, but also add significant complexity to a wireless communication network.

Accordingly, it is desired to provide a method of utilising functionality available in a multi point HSDPA telecommunication network.

### SUMMARY

A first aspect provides a method of configuring network nodes to facilitate handover in a multi-point wireless communications network comprising a plurality of network access nodes operable to support radio cells to enable radio communication with user equipment, the method comprising:
determining that an identified radio cell supported by a network access node meets predetermined criteria to be added to a user equipment active set;
adding said identified radio cell to the user equipment active set;
instructing preconfiguration of the user equipment and the network access node supporting the identified radio cell to operate with the identified radio cell as a serving cell; and instructing preconfiguration of the user equipment and the network access node supporting the identified radio cell to operate with the identified radio cell as a secondary serving cell.

In a single carrier network a procedure known as "enhanced serving cell change" (ESCC) allows user equipment to perform fast handover between coverage areas provided by adjacent base stations. In ESCC, whenever a new cell is added to an active set of user equipment, the user equipment is also preconfigured to see that new (non-serving) cell in a manner which would allow it to operate as the user equipment serving cell. That is to say, every non-serving cell in a user equipment's active set may be a potential handover target cell. Since the user equipment is preconfigured to operate with a non-serving cell as a serving cell, there is no need to use slow RRC layer messages from a radio network controller to user equipment, to enable a change in the serving cell. Instead, a target cell sends a layer 1 message, in the form of an HS-SCCH order, instructing user equipment to change its serving cell.

It will be understood by a man skilled in the art that user equipment typically performs measurements of pilot signals transmitted by base stations. In particular, the user equipment is operable to determine whether the received signal strength of a pilot signal from a base station meets the predetermined threshold and, if so, that base station supporting a particular cell is to be added to the user equipment's active set. It will thus be understood that the active set of a user equipment is indicative of the cells which a user equipment can "see" at any given point.

In one example, user equipment may be operating in a network and, after considering user equipment measurement reports sent up to an RNC, it may be determined that the user equipment ought to add a further cell to its active set. In such a case, the RNC adds cell 2 to the user equipment active set and is operable to instruct preconfiguration of the user equipment so that the user equipment is ready to operate with the new cell as a serving cell if certain serving cell criteria are triggered.

User equipment will typically be operable to continue to perform measurements and at some point that new cell may have a better signal quality than that of its own serving cell. At that point, user equipment triggers an event (in a UMTS system known as a 1D event) and informs the RNC. The RNC informs the new cell of a serving cell change for that particular user equipment and that cell, now being the target cell, informs the user equipment via HS-SCCH order of a serving cell change. The RNC need not be operable to reconfigure user equipment to hand over to cell 2 during a handover process, since it has already been preconfigured to see that new cell as a serving cell. This system allows a fast changing of serving cell in a handover scenario.

In a multi-carrier HSDPA network, primary and secondary carriers are contained in the serving cell supported by the same base station and thus they will typically hand over at the same time. If the target cell does not support secondary carriers and multi-carrier operation, the network knows of this status before handover and preconfigures user equipment to operate either in a single carrier HSDPA mode or a multi-carrier HSDPA mode after handover.

However, in a multi point HSDPA network it may be the case that only a primary carrier belongs to the serving cell, whilst the secondary carrier resides and is supported by another base station; that is to say, a non-serving cell. Thus, in a multi point HSDPA handover, a change in serving cell leads to a change in primary carrier only. The status of the secondary carrier after a handover in a multi point HSDPA network is unknown. It may, for example, be supported by a different cell, it may be a different cell or the same cell to that used as secondary carrier prior to handover. Thus, the network is unable to preconfigure user equipment to enable multi point HSDPA operation, allowing for enhanced serving cell change (ESCC) and resulting fast handover processes.

The first aspect recognizes that it is possible to allow MP-HSDPA operation in a network and still benefit from expedited handover using ESCC techniques. In particular, the first aspect recognises that by preconfiguring wireless access nodes when they are added to user equipment active sets to operate such that they are a serving base station or secondary base station, it is possible to maintain data traffic throughput by enabling MP-HSDPA operation through a handover process. It will be appreciated that handover typically occurs when user equipment is operating in a cell_DCH state and that maintaining a high data traffic throughput whilst handing over between cells can be particularly beneficial.

Embodiments of the first aspect allow a multi point HSDPA capable network to operate using multi point HSDPA both before, during and after a handover event. The very basic principle of such an arrangement according to aspects and embodiments described herein is that the network, for example, an RNC, is operable to preconfigure user equipment and cells such that every cell in the user equipment active set may act as a potential secondary carrier.

In one embodiment, the method comprises: instructing preconfiguration of a serving network access node supporting a serving cell of the user equipment to operate as a secondary serving cell. Accordingly by preconfiguring even a cell currently acting as a user equipment serving cell to act as a potential secondary carrier, MP-HSDPA operation may be maintained. This differs to existing ESCC operation, where only non-serving cells are preconfigured to operate as a potential serving cell. It will be appreciated that in multi point HSDPA operation, after a handover it is quite likely that a previous serving cell is likely to act as a secondary carrier and, thus, preconfiguring cells to not only act as potential serving cells but also as potential secondary carriers can be particularly useful.

In one embodiment, the method comprises: instructing preconfiguration of all of the plurality of network access nodes to operate as a secondary cell. Accordingly, each cell may be instructed when initially added to user equipment active set or a specific instruction to prepare and preconfigure to operate as a secondary cell may be sent.

In one embodiment, the method comprises: instructing preconfiguration of at least one of the plurality of network access nodes to operate with the identified radio cell as a serving cell. Accordingly, re-configuration may be required at other network access nodes to enable the identified radio cell to operate as a serving cell in the event handover occurs. Preconfiguring those cells to operate with the identified radio cell as a serving cell aids speed of the handover process.

In one embodiment, the method comprises: instructing preconfiguration of at least one of the plurality of network access nodes to operate with said identified radio cell as a secondary cell. Accordingly, re-configuration may be required at other network access nodes to enable the identified radio cell to operate as a serving cell in the event handover occurs. Preconfiguring those cells to operate as secondary serving cells aids speed of the handover process.

In one embodiment, the method comprises: instructing preconfiguration of the user equipment to operate with a predetermined radio cell supported by one of the network access nodes as a secondary serving cell. Accordingly, re-configuration may be required at user equipment to enable a predetermined radio cell to operate as a secondary serving cell in the event handover occurs. Preconfiguring that cell to operate as a secondary serving cell and user equipment to see that cell as a secondary serving cell aids speed of the handover process.

In one embodiment, the method comprises: determining that a target radio cell supported by one of the plurality of network access nodes meets predetermined criteria to be the user equipment serving cell; and indicating to the target radio cell that it is to commence operation as the user equipment serving cell.

Accordingly, any of the cells supported by the plurality of network nodes, including, for example, the identified radio cell, may be determined to meet criteria indicating that they are a suitable target cell and ought to become serving cell via a handover process. The predetermined criteria to be user equipment serving cell may, for example be event 1 D criteria. That is to say an RNC may determine, from measurements made by user equipment that a target cell is being received with a strength greater than that of a the user equipment serving cell at the user equipment. In such a case an RNC may be operable to instruct a pre-configured radio cell to inform the user equipment that it is to commence operation as the user equipment serving cell. That instruction to user equipment then originates at the new serving cell, and in embodiments occurs via an HS-SCCH order.

A second aspect provides a computer program product operable, when executed on a computer, to perform the method of the first aspect.

A third aspect provides a network control node operable to configure network nodes to facilitate handover in a multi-point wireless communications network comprising a plurality of network access nodes operable to support radio cells to enable radio communication with user equipment, the network control node comprising: determination logic operable to determine that an identified radio cell supported by a network access node meets predetermined criteria to be added to a user equipment active set; active set logic operable to add the identified radio cell to the user equipment active set; instruction logic operable to instruct preconfiguration of the user equipment and the network access node supporting the identified radio cell to operate with the identified radio cell as a serving cell and as a secondary serving cell.

Accordingly, a network control node, for example an RNC, Femto Gateway, eNode B or any network node having similar control functionality may be operable to perform a method in accordance with the first aspect.

In one embodiment, the network control node comprises: instruction logic operable to instruct preconfiguration of a serving network access node supporting a serving cell of the user equipment to operate as a secondary serving cell.

In one embodiment, the network control node comprises: instruction logic operable to instruct preconfiguration of all of the plurality of network access nodes to operate as a secondary cell.

In one embodiment, the network control node comprises: instruction logic operable to instruct preconfiguration of at least one of the plurality of network access nodes to operate with the identified radio cell as a serving cell.

In one embodiment, the network control node comprises: instruction logic operable to instruct preconfiguration of at least one of the plurality of network access nodes to operate with the identified radio cell as a secondary cell.

In one embodiment, the network control node comprises: instruction logic operable to instruct preconfiguration of the user equipment to operate with a predetermined radio cell supported by one of the network access nodes as a secondary serving cell.

In one embodiment, the network control node comprises: determination logic operable to determine that a target radio cell supported by one of the plurality of network access nodes meets predetermined criteria to be the user equipment serving cell; and indication logic operable to indicate to the target radio cell that it is to commence operation as the user equipment serving cell.

A fourth aspect provides a method of configuring network access nodes to facilitate handover in a multi-point wireless communications network comprising a plurality of network access nodes operable to support radio cells to enable radio communication with user equipment, the method comprising: supporting an identified radio cell identified by a user equipment as meeting predetermined criteria to be added to the user equipment active set; determining that the identified radio cell has been added to the user equipment active set; receiving an instruction to preconfigure to operate as a serving cell to the user equipment; and receiving an instruction to preconfigure to operate as a secondary serving cell to the user equipment.

Accordingly, a network access node, such as a base station, small cell base station, eNodeB or network node offering similar functionality, may assist in implementation of the method according to the first aspect.

In one embodiment, the method comprises: receiving an indication that a target radio cell supported by one of said plurality of network access nodes meets predetermined serving cell criteria and that operation of that target radio cell as the user equipment serving cell is to commence. Accordingly, a network access node may be operable to instruct user equipment, via a layer one message, or HS-SCCH order, of a serving cell change. Such an arrangement is possible, without the need for RRC messaging, since the network nodes (access, control and user equipment) have been pre-configured in a variety of ways.

In some embodiments, an ESCC HS-SCCH order from a target serving cell setting itself as serving cell may also indicate to user equipment which non-serving cell is to act as secondary serving cell or support the secondary carrier.

In alternative embodiments, the network is operable to preconfigure user equipment to operate a particular non-serving cell as a secondary carrier during an active set update. In such an active set update a new non-serving cell is added or removed from the user equipment active set and, in the same way, the preconfiguration is performed and removed at the user equipment, depending on the status of the non-serving cell.

In some embodiments, all non-serving cells are preconfigured to act as secondary serving cells. An HS-SCCH order to change a secondary carrier from one non-serving cell to another can be performed even if there is no serving cell; that is to say, primary carrier cell, change. In other words, a layer 1 HS-SCCH order may be transmitted to change the cell acting as secondary carrier without any changes to a primary carrier cell.

A further embodiment allows the HS-SCCH order to be operable to change secondary carrier and that order may be transmitted by a non-serving cell. The non-serving cell may, according to some embodiments, be the existing secondary carrier. Such an arrangement recognizes that HS-SCCH orders are a limited network resource and that the primary carrier may not have sufficient orders to perform a necessary secondary carrier cell change.

This does not preclude transmission of an HS-SCCH order from other non-serving cells. For example, an HS-SCCH order may come from the new target secondary carrier cell. This may be important if the serving cell has run out of HS-SCCH resource and the user equipment has a sudden loss of secondary carrier, for example due to geographical reasons relating to radio coverage. Use of an HS-SCCH order from another, non-serving, cell, for example, a target secondary carrier cell, can be useful. However, such embodiments require that user equipment is operable to listen to such orders from non-serving cells and, in particular, non-serving cells which are not even secondary carriers.

A fifth aspect provides a computer program product operable, when executed on a computer, to perform the method of the fourth aspect.

A sixth aspect provides a network access node operable to configure itself to facilitate handover in a multi-point wireless communications network comprising a plurality of network access nodes operable to support radio cells to enable radio communication with user equipment, the network access node comprising: radio communication logic operable to support an identified radio cell identified by a user equipment as meeting predetermined criteria to be added to the user equipment active set; determination logic operable to determine that the identified radio cell has been added to the user equipment active set; reception logic operable to receive an instruction to preconfigure to operate as a serving cell to the user equipment; and receive an instruction to preconfigure to operate as a secondary serving cell to the user equipment.

A seventh aspect provides a method of configuring user equipment to facilitate handover in a multi-point wireless communications network comprising a plurality of network access nodes operable to support radio cells to enable radio communication with user equipment, said method comprising: identifying an identified radio cell supported by one of the plurality of network access nodes meets predetermined criteria to be added to the user equipment active set; adding the identified radio cell to the user equipment active set; receiving an instruction to preconfigure to operate with the network access node supporting the identified radio cell as a serving cell; and receiving an instruction to preconfigure to operate with the network access node supporting the identified radio cell as a secondary serving cell.

Accordingly, user equipment may assist in implementing the method of the first aspect. By making measurements which are interpreted by the network, user equipment helps to identify potential cells to add to its active set, and potential target cells during handover. By preconfiguring itself to operate with alternative cells as serving or secondary cells during MP-HSDPA operation, it is possible to unsure that the data traffic throughput associated with MP-HSDPA operation can be maintained during a handover event.

An eighth aspect provides a computer program product operable, when executed on a computer, to perform the method of the seventh aspect.

A ninth aspect provides user equipment operable to configure itself to facilitate handover in a multi-point wireless communications network comprising a plurality of network access nodes operable to support radio cells to enable radio communication with user equipment, the user equipment comprising: measurement logic operable to identify an identified radio cell supported by one of the plurality of network access nodes meets predetermined criteria to be added to the user equipment active set; active set logic operable to add the identified radio cell to the user equipment active set; configuration logic operable to receive an instruction to preconfigure to operate with the network access node supporting the identified radio cell as a serving cell and as a secondary serving cell.

Further particular and preferred aspects are set out in the accompanying independent and dependent claims. Features of the dependent claims may be combined with the features of the independent claims as appropriate, and in combinations other than those explicitly set out in the claims.

### BRIEF DESCRIPTION OF THE DRAWINGS

Embodiments of the present invention will now be described further with reference to the accompanying drawings, in which:
Figure 1 illustrates the main components of a telecommunications network according to one embodiment;
Figures 2a to 2c illustrate schematically multi-point network handover methods;
Figure 3 illustrates schematically a multi point HSDPA scenario according to one embodiment;
Figures 4 to 6 illustrate schematically signalling diagrams of handover scenarios according to embodiments described with reference to the multi point HSDPA network shown in Figure 3; and
Figure 7 illustrates schematically network signalling in a non multi-point HSDPA scenario.

### DESCRIPTION OF THE EMBODIMENTS

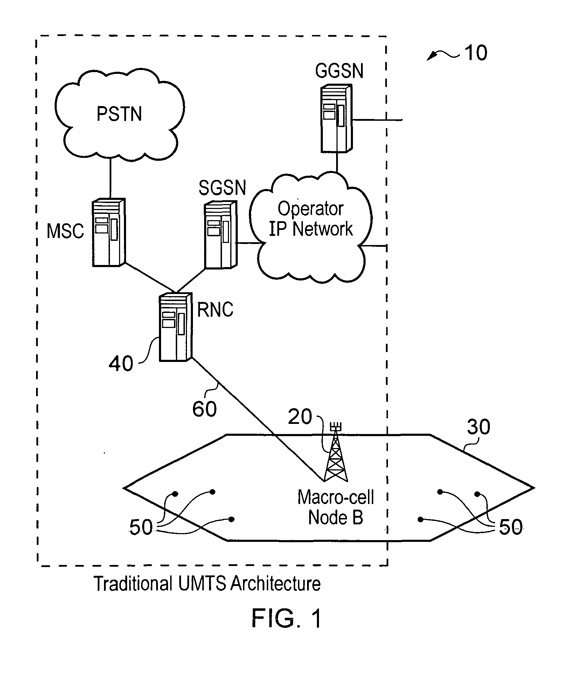

Figure 1 illustrates a wireless communications system, generally 10. User equipment 50 roam through the wireless telecommunications system. Base stations 20 are provided which support areas of radio coverage 30. A number of such base stations 20 are provided and distributed geographically in order to provide a wide area of coverage to user equipment 50. When user equipment is within an area served by a base station 30, communication may be established between the user equipment and the base station over associated radio links. Each base station typically supports a number of sectors within the geographical area of service 30.

Typically, a different antenna within a base station supports each associated sector. Each base station 20 has multiple antennas. It will be appreciated that Figure 1 illustrates a small sub-set of a total number of user equipment and base stations that may be present in a typical communications system.

A wireless communications system is managed by a radio network controller (RNC) 40. The RNC 40 controls operation of the wireless communications system by communicating with a plurality of base stations over backhaul communication links 60. The RNC also communicates with user equipment 50 via each base station and thus effectively manages a region of the entire wireless communications system.

User equipment communicates with base station 20 by transmitting data and information on channels known as uplink or reverse channels, and base station 20 communicates with user equipment 50 by transmitting data and information on radio channels known as downlink or forward channels.

It has been recognized that in a wireless telecommunications network it is possible to increase uplink data throughput and downlink data throughput by allowing transmission on two or more carriers simultaneously. A wireless telecommunications network allowing for user equipment to receive or transmit on two or more carriers simultaneously will typically be known as a multi-carrier network. In multi-carrier networks and, in particular, multi-carrier high speed downlink packet access networks, user equipment may receive from more than one carrier or cell at the same time. Those carriers are transmitted from the same base station and each carrier typically uses a different frequency carrier. Such a system is known as multi-cell HSDPA operation.

It has been proposed to allow multi point HSDPA operation within a network, in which user equipment is operable to receive two or more carriers at the same time. Unlike multi-carrier HSDPA operation, user equipment operating in multi point HSDPA receives two or more carriers which may come from a different base station and those carriers can be transmitted on the same frequency.

In multi-carrier and multi point HSDPA networks user equipment has both a primary carrier and one or more secondary carriers. The primary carrier contains essential control channels and cannot be deactivated, whilst any of the secondary carriers can be deactivated by a base station using an HS-SCCH order.

It should be appreciated that primary and secondary carriers in multi point HSDPA networks may come from different base stations. In particular, in multi point HSDPA operation a primary carrier is transmitted by the serving cell. A secondary carrier is transmitted by a non-serving cell and that is known as the secondary serving cell.

In a single carrier network a procedure known as "enhanced serving cell change" (ESCC) allows user equipment to perform fast handover between coverage areas provided by adjacent base stations. In ESCC, whenever a new cell is added to an active set of user equipment, the user equipment is also preconfigured to see that new (non-serving) cell in a manner which would allow it to operate as the user equipment serving cell. That is to say, every non-serving cell in a user equipment's active set may be a potential handover target cell. Since the user equipment is preconfigured to operate with a non-serving cell as a serving cell, there is no need to use slow RRC layer messages from a radio network controller to user equipment, to enable a change in the serving cell. Instead, a target cell sends a layer 1 message, in the form of an HS-SCCH order, instructing user equipment to change its serving cell.

It will be understood by a man skilled in the art that user equipment typically performs measurements of pilot signals transmitted by base stations. In particular, the user equipment is operable to determine whether the received signal strength of a pilot signal from a base station meets the predetermined threshold and, if so, that base station supporting a particular cell is to be added to the user equipment's active set. It will thus be understood that the active set of a user equipment is indicative of the cells which a user equipment can "see" at any given point.

In one example, user equipment may be operating in a network and, after considering user equipment measurement reports sent up to an RNC, it may be determined that the user equipment ought to add a further cell to its active set. In such a case, the RNC adds cell 2 to the user equipment active set and is operable to instruct preconfiguration of the user equipment so that the user equipment is ready to operate with the new cell as a serving cell if certain serving cell criteria are triggered.

User equipment will typically be operable to continue to perform measurements and at some point that new cell may have a better signal quality than that of its own serving cell. At that point, user equipment triggers an event (in a UMTS system known as a 1D event) and informs the RNC. The RNC informs the new cell of a serving cell change for that particular user equipment and that cell, now being the target cell, informs the user equipment via HS-SCCH order of a serving cell change. The RNC need not be operable to reconfigure user equipment to hand over to cell 2 during a handover process, since it has already been preconfigured to see that new cell as a serving cell. This system allows a fast changing of serving cell in a handover scenario.

In a multi-carrier HSDPA network, primary and secondary carriers are contained in the serving cell supported by the same base station and thus they will typically hand over at the same time. If the target cell does not support secondary carriers and multi-carrier operation, the network knows of this status before handover and preconfigures user equipment to operate either in a single carrier HSDPA mode or a multi-carrier HSDPA mode after handover.

However, in a multi point HSDPA network it may be the case that only a primary carrier belongs to the serving cell, whilst the secondary carrier resides and is supported by another base station; that is to say, a non-serving cell. Thus, in a multi point HSDPA handover, a change in serving cell leads to a change in primary carrier only. The status of the secondary carrier after a handover in a multi point HSDPA network is unknown. It may, for example, be supported by a different cell, it may be a different cell or the same cell to that used as secondary carrier prior to handover. Thus, the network is unable to preconfigure user equipment to enable multi point HSDPA operation, allowing for enhanced serving cell change (ESCC) and resulting fast handover processes.

Embodiments recognize that it is possible to allow MP-HSDPA operation having ESCC.

Before describing particular implementations according to embodiments, a general overview of techniques used according to aspects will be provided.

### OVERVIEW

It will be appreciated that one possible solution to handover issues in a multi point HSDPA network would be for the network and user equipment to both disable multi point HSDPA operation automatically after completing a handover. The network may be operable to re-start multi point HSDPA once the user equipment has successfully moved to a target serving cell. The network can further wait for the latest measurement reports from user equipment which can then be used to determine which new cell is to act as a secondary carrier. Such a solution is simple, can be applied even when using ESCC techniques, and also whilst using normal handover procedures. However, it can cause delays in configuring multi point HSDPA and cause user equipment to lose increased data throughput.

Alternative arrangements and methods allow a multi point HSDPA capable network to operate using multi point HSDPA both before, during and after a handover event. The very basic principle of such an arrangement according to aspects and embodiments described herein is that the network, for example, an RNC, is operable to preconfigure user equipment such that every cell in the user equipment active set may act as a potential secondary carrier.

It should be noted that even a serving cell is preconfigured to act as a potential secondary carrier.

This differs to existing ESCC operation, where only non-serving cells are preconfigured to operate as a potential serving cell. It will be appreciated that in multi point HSDPA operation, after a handover it is quite likely that a previous serving cell is likely to act as a secondary carrier and, thus, preconfiguring cells to not only act as potential serving cells but also as potential secondary carriers can be particularly useful.

In some embodiments, an ESCC HS-SCCH order from a target serving cell setting itself as serving cell may also indicate to user equipment which non-serving cell is to act as secondary serving cell or support the secondary carrier.

In alternative embodiments, the network is operable to preconfigure user equipment to operate a particular non-serving cell as a secondary carrier during an active set update. In such an active set update a new non-serving cell is added or removed from the user equipment active set and, in the same way, the preconfiguration is performed and removed at the user equipment, depending on the status of the non-serving cell.

In some embodiments, all non-serving cells are preconfigured to act as secondary serving cells. An HS-SCCH order to change a secondary carrier from one non-serving cell to another can be performed even if there is no serving cell; that is to say, primary carrier cell, change. In other words, a layer 1 HS-SCCH order may be transmitted to change the cell acting as secondary carrier without any changes to a primary carrier cell.

A further embodiment allows the HS-SCCH order to be operable to change secondary carrier and that order may be transmitted by a non-serving cell. The non-serving cell may, according to some embodiments, be the existing secondary carrier. Such an arrangement recognizes that HS-SCCH orders are a limited network resource and that the primary carrier may not have sufficient orders to perform a necessary secondary carrier cell change.

This does not preclude transmission of an HS-SCCH order from other non-serving cells. For example, an HS-SCCH order may come from the new target secondary carrier cell. This may be important if the serving cell has run out of HS-SCCH resource and the user equipment has a sudden loss of secondary carrier, for example due to geographical reasons relating to radio coverage. Use of an HS-SCCH order from another, non-serving, cell, for example, a target secondary carrier cell, can be useful. However, such embodiments require that user equipment is operable to listen to such orders from non-serving cells and, in particular, non-serving cells which are not even secondary carriers.

### Example 1

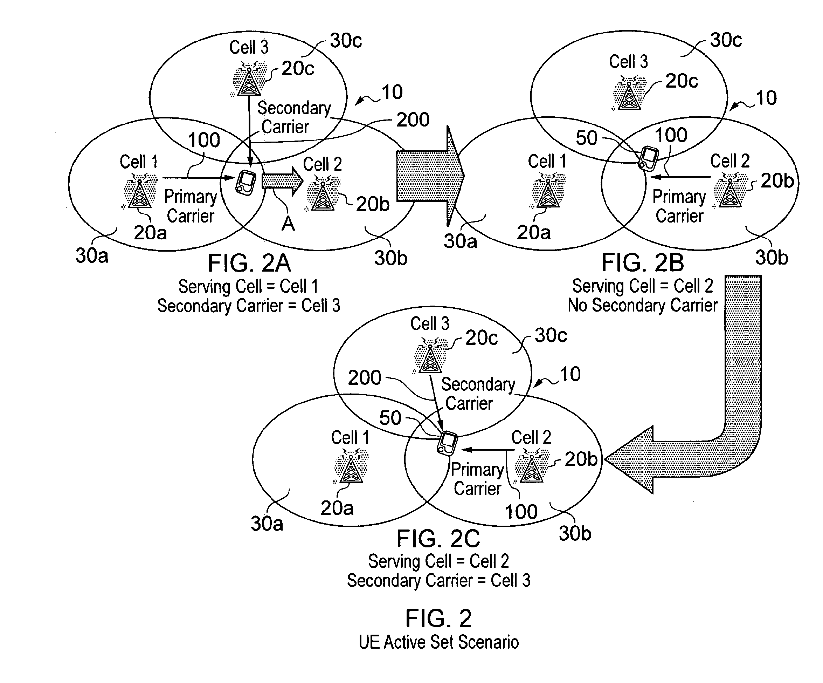

Figure 2 illustrates schematically user equipment 50 operating in a network 10 comprising three base stations 20a, 20b, 20c each supporting a cell 30a, 30b, 30c. In this case, user equipment 50 has an active set comprising cell 1, cell 2 and cell 3 supported by base stations 20a, 20b and 20c respectively, and illustrated as 30a, 30b and 30c. As shown in Figure 2a, user equipment 50 is primarily located in cell 1 and in this case cells 2 and 3 are considered to be the non-serving cells. In the illustrated case, user equipment 50 is operating in a multi point HSDPA mode having a primary carrier supported by cell 1. That is to say, cell 1 is its serving cell and its secondary carrier is in cell 3 supported by base station 30c. The primary carrier in Figure 2a is illustrated by an arrow and labelled "100". The secondary carrier is also labelled with an arrow and numbered "200". User equipment moves in the direction indicated by arrow A.

According to the scenario shown in Figures 2a to 2c, the network is operable to disable MP-HSDPA operation after a handover. As a result, as user equipment 50 moves towards base station 20b and further enters cell 30b, also known as cell 2, measurement reports from the user equipment will tend to force a handover. The user equipment 50 performs a serving cell change, as shown in Figure 2b, and changes its serving cell to cell 2 via either ESCC or a conventional handover. When the user equipment completes the handover, the network and user equipment stop operating according to multi point HSDPA.

As shown in Figure 2b, only the serving cell, cell 2, is transmitting HSDPA packets to user equipment 50 on primary carrier 100. After a period of time in cell 2, supported by base station 20b, the network may decide that, in accordance with measurement reports made by user equipment 50, cell 3, supported by base station 20c, may be operable to provide a secondary carrier and operate as a secondary serving cell. The network then sends an RRC reconfiguration message to user equipment 50 to then figure the user equipment to receive a secondary carrier from cell 3 shown in Figure 2c.

Thus, it can be seen in the embodiment shown schematically in Figure 2 that the solution is simple, can be applied to both ESCC and normal handover operation, but may cause delays in configuring multi point HSDPA operation, thus causing user equipment 50 to lose throughput for a period of time.

### Example 2

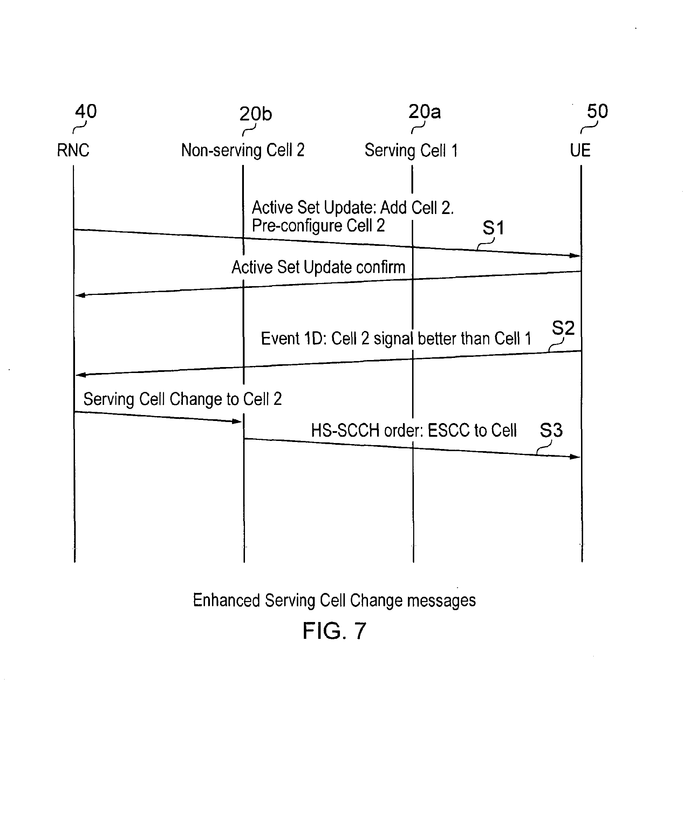

Figure 7 illustrates schematically enhanced serving cell change (ESCC).

By way of background, Figure 7 illustrates schematically a signalling diagram showing signalling typically involved when implementing enhanced serving cell change (ESCC). ESCC allows user equipment 50 to perform fast handovers from a serving cell 20a to a non-serving cell or target cell 20b. In ESCC, whenever a new cell joins a user equipment active set, the user equipment 50 is preconfigured to see that new non-serving cell 20b as a potential serving cell. That is to say, every non-serving cell in the active set of user equipment can be a potential target cell. Since user equipment 50 is already configured to operate using a non-serving cell as a serving cell, handover can be performed quickly since there is no need for signalling to pass all the way up through to an RNC and a core network in order to change a serving cell. The majority of that signalling has already occurred prior to the need to change serving cell. At the point of needing to change a serving cell, the target cell is operable to send a layer 1 message in the form of an HS-SCCH order, instructing user equipment to change its serving cell.

In the scenario shown in Figure 7, after considering measurement reports made by user equipment 50, RNC 40 adds one serving cell 20b to the active set of user equipment 50 and sends a message to user equipment 50. That step is illustrated as step S1 in Figure 7. At step S1, the RNC also sends messaging to preconfigure user equipment 50 such that the user equipment is ready to operate with cell 2 as its serving cell, if triggered. At some point, user equipment determines by measurement that cell 2, non-serving cell 20b, has better signal quality at user equipment 50 than that of its serving cell 20a. As a result, the user equipment 50 triggers an event 1d, labelled as step S2 in Figure 7, to inform the RNC of the occurrence of that event. The RNC is operable to inform cell 2, 20b, of a serving cell change for user equipment 50, and cell 2, 20b, informs the user equipment via an HS-SCCH order of a serving cell change. That change is indicated as step S3 in Figure 7. In this instance, the RNC does not need to reconfigure user equipment to hand over to cell 2 during the handover process, thus allowing a relatively fast change in serving cell.

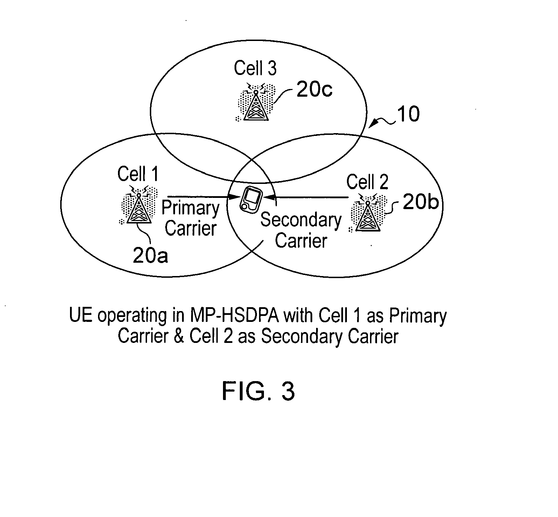

Figure 3 illustrates schematically user equipment operating according to multi point HSDPA methods in a region of a telecommunication network. As shown in Figure 3, user equipment 50 operates in a region of a telecommunications network 10 supported by three base stations 20a, 20b and 20c. Those base stations support cells 1, 2 and 3 respectively. The active set of user equipment 50 comprises cell 1 and cell 2, where cell 1 is the serving cell and cell 2 is the non-serving cell. The user equipment 50 as shown in Figure 3 is operating in multi point HSDPA mode and is configured to see cell 1 as its primary carrier and serving cell, and cell 2 as its secondary carrier and secondary serving cell.

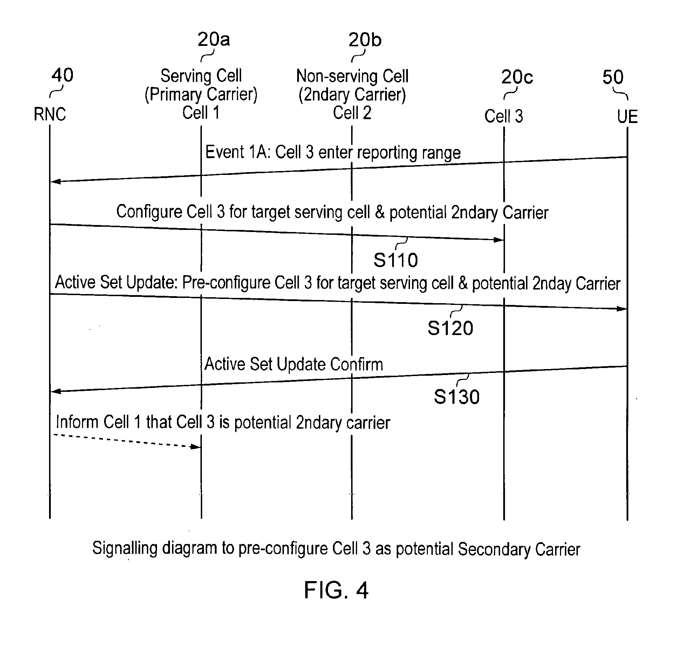

Figure 4 illustrates schematically, by a signalling diagram, messaging steps necessary to preconfigure cell 3 as a potential secondary carrier in the scenario illustrated schematically in Figure 3.

If user equipment 50 detects that cell 3 signal quality meets the criteria to be added to its active set, it triggers an event 1a and sends that message to RNC 40. The step of sending an event 1a message is labelled as S100 in Figure 4. The network adds cell 3 to the user equipment active set S110 and sends an active set update to the user equipment S120. In both cases, the message sent in steps S 1 10 and S120 is such that cell 3 is configured as a potential target serving cell and a potential secondary carrier or secondary cell. The network preconfigures cell 3 to act as a target serving cell and a potential secondary carrier. Furthermore, when sending an active set update to user equipment 50 the network sends preconfiguration parameters to user equipment 50 such that it is able to see new cell 3 as being a potential target serving cell and a potential secondary carrier.

The network may also be operable to inform cell 1 that cell 3 is a potential secondary carrier. That step may not be required, dependent upon whether multi point HSDPA operation implemented in the network requires the primary carrier cell to be fully aware of possible secondary carrier cells.

As shown in Figure 4, user equipment 50 is operable to confirm to RNC 40 that it has completed an active set update S130.

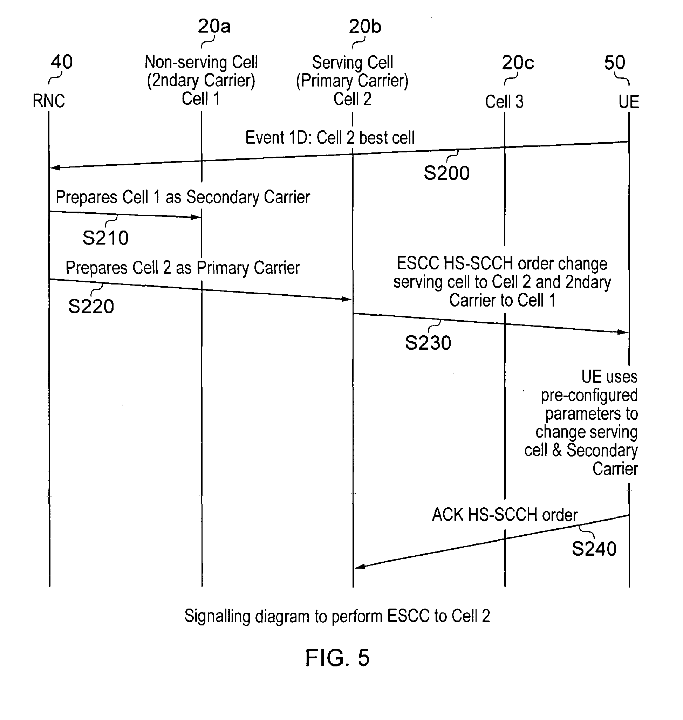

Figure 5 illustrates schematically, via a signalling diagram, network signalling which occurs as user equipment 50 moves towards base station 20b shown in Figure 3. As user equipment 50 moves towards base station 20b its measurements may be such that cell 2 signal quality is determined to be better than that of its serving cell, cell 1. As a result, user equipment 50 triggers an event 1 d indicating that cell 2 is now its best cell in terms of signal quality. That step is illustrated as step S200 in Figure 5. RNC 40 determines, based upon past user equipment measurements, that cell 1 supported by base station 20a is likely to be suitable as a secondary carrier. In this illustrated case, the RNC 40 need not flush RLC buffers of cell 1. RNC 40 prepares cell 1 to operate as a secondary carrier S210 and also prepares cell 2 to act as a serving cell and primary carrier S220. Once cell 2 is prepared as a primary carrier, it is operable to send an HS-SCCH order to user equipment 50 to perform ESCC, S230. That HS-SCCH order indicates that cell 1 is to be used as a new secondary cell. User equipment 50 acknowledges the HS-SCCH orders and changes its serving cell to cell 2 and its secondary carrier to cell 1, according to the preconfigured parameters S240. Since user equipment 50 is preconfigured to operate with cell 1 as a secondary carrier, it continues to operate in a multi point HSDPA mode after ESCC cell 2.

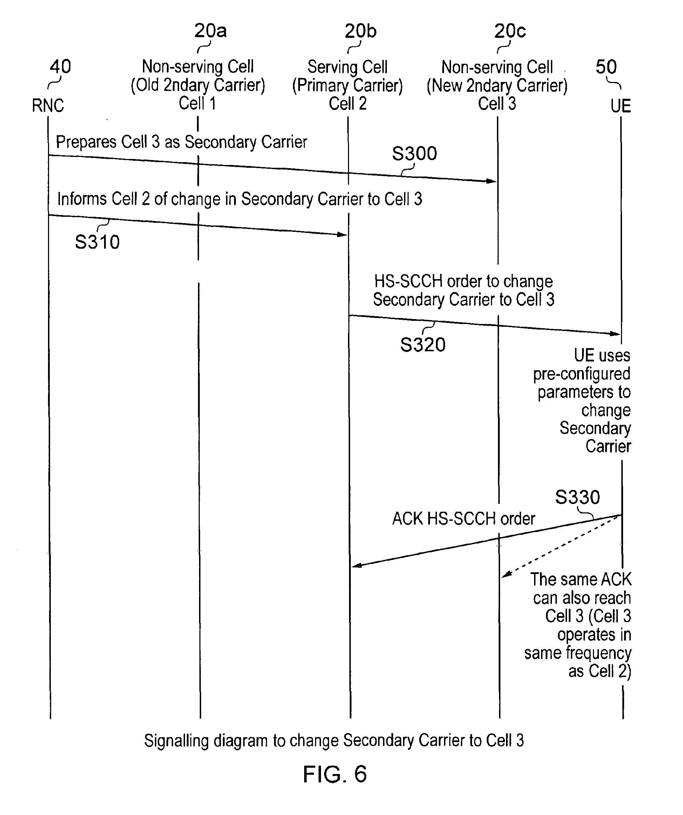

Figure 6 illustrates schematically via signal diagram a situation in which user equipment moves within the network 10 shown in Figure 3, and measurements taken by user equipment 50 indicate that cell 3 supported by base station 20c is better suited to operation as a secondary carrier in comparison to cell 1. Once the network and, in particular, RNC 40 has determined that cell 3 is actually better suited to operate as a secondary carrier in comparison to cell 1, the following network signalling occurs. RNC 40 prepares cell 3 supported by base station 20c to operate as a secondary carrier S300. The RNC also informs cell 2 that cell 3 is to operate as the secondary carrier 5310. Cell 2, which currently acts as user equipment 50's primary carrier, sends an HS-SCCH order to the user equipment instructing it to change secondary carrier from cell 1 to cell 3, S320. The user equipment 50 performs the required change based on preconfigured parameters and acknowledges the HS-SCCH order S330. In the illustrated embodiment the acknowledgement sent by user equipment 50 can reach both cell 2 and cell 3. If it reaches cell 3, depending upon network implementation, cell 3 may immediately start transmitting to user equipment. Alternatively, cell 3 may wait for permission from RNC 40 before beginning transmissions to user equipment 50.

Embodiments enable fast changes to a secondary carrier in multi point HSDPA operation by using layer 1 HS-SCCH orders. Such an arrangement also enables multi point HSDPA to be maintained during ESCC operation.

It will be appreciated that a person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of configuring network nodes to facilitate handover in a multi-point wireless communications network comprising a plurality of network access nodes operable to support radio cells to enable radio communication with user equipment, said method comprising:
determining that an identified radio cell supported by a network access node meets predetermined criteria to be added to a user equipment active set;
adding said identified radio cell to said user equipment active set; and
instructing preconfiguration of said user equipment and said network access node supporting said identified radio cell to operate with said identified radio cell as a serving cell;
instructing preconfiguration of said user equipment and said network access node supporting said identified radio cell to operate with said identified radio cell as a secondary serving cell.

2. A method according to claim 1, comprising:
instructing preconfiguration of a serving network access node supporting a serving cell of said user equipment to operate as a secondary serving cell.

3. A method according to claim 1, comprising:
instructing preconfiguration of all of said plurality of network access nodes to operate as a secondary cell.

4. A method according to any preceding claim, comprising:
instructing preconfiguration of at least one of said plurality of network access nodes to operate with said identified radio cell as a serving cell.

5. A method according to any preceding claim, comprising:
instructing preconfiguration of at least one of said plurality of network access nodes to operate with said identified radio cell as a secondary cell.

6. A method according to any preceding claim, comprising:
instructing preconfiguration of said user equipment to operate with a predetermined radio cell supported by one of said network access nodes as a secondary serving cell.

7. A method according to any preceding claim, comprising:
determining that a target radio cell supported by one of said plurality of network access nodes meets predetermined criteria to be said user equipment serving cell; and
indicating to said target radio cell that it is to commence operation as said user equipment serving cell.

8. A computer program product operable, when executed on a computer, to perform the method of any one of claims 1 to 7.

9. A network control node operable to configuring network nodes to facilitate handover in a multi-point wireless communications network comprising a plurality of network access nodes operable to support radio cells to enable radio communication with user equipment, said network control node comprising:
determination logic operable to determine that an identified radio cell supported by a network access node meets predetermined criteria to be added to a user equipment active set;
active set logic operable to add said identified radio cell to said user equipment active set;
instruction logic operable to instruct preconfiguration of said user equipment and said network access node supporting said identified radio cell to operate with said identified radio cell as a serving cell and as a secondary serving cell.

10. A method of configuring network access nodes to facilitate handover in a multi-point wireless communications network comprising a plurality of network access nodes operable to support radio cells to enable radio communication with user equipment, said method comprising:
supporting an identified radio cell identified by a user equipment as meeting predetermined criteria to be added to said user equipment active set;
determining that said identified radio cell has been added to said user equipment active set;
receiving an instruction to preconfigure to operate as a serving cell to said user equipment; and
receiving an instruction to preconfigure to operate as a secondary serving cell to said user equipment.

11. A computer program product operable, when executed on a computer, to perform the method of claim 10.

12. A network access node operable to configure itself to facilitate handover in a multi-point wireless communications network comprising a plurality of network access nodes operable to support radio cells to enable radio communication with user equipment, said network access node comprising:
radio communication logic operable to support an identified radio cell identified by a user equipment as meeting predetermined criteria to be added to said user equipment active set;
determination logic operable to determine that said identified radio cell has been added to said user equipment active set;
reception logic operable to receive an instruction to preconfigure to operate as a serving cell to said user equipment; and receive an instruction to preconfigure to operate as a secondary serving cell to said user equipment.

13. A method of configuring user equipment to facilitate handover in a multi-point wireless communications network comprising a plurality of network access nodes operable to support radio cells to enable radio communication with user equipment, said method comprising:
identifying an identified radio cell supported by one of said plurality of network access nodes meets predetermined criteria to be added to said user equipment active set;
adding said identified radio cell to said user equipment active set;
receiving an instruction to preconfigure to operate with said network access node supporting said identified radio cell as a serving cell; and
receiving an instruction to preconfigure to operate with said network access node supporting said identified radio cell as a secondary serving cell.

14. A computer program product operable, when executed on a computer, to perform the method of claim 13.

15. User equipment operable to configure itself to facilitate handover in a multi-point wireless communications network comprising a plurality of network access nodes operable to support radio cells to enable radio communication with user equipment, said user equipment comprising:
measurement logic operable to identify an identified radio cell supported by one of said plurality of network access nodes meets predetermined criteria to be added to said user equipment active set;
active set logic operable to add said identified radio cell to said user equipment active set;
configuration logic operable to receive an instruction to preconfigure to operate with said network access node supporting said identified radio cell as a serving cell and as a secondary serving cell.

## Amended claims

### Amended claims in accordance with Rule 137(2) EPC.

**1.** A method of configuring network nodes (20, 30,40) to facilitate handover in a multi-point wireless communications network comprising a plurality of network access nodes (20a, 20b,20c) operable to support radio cells to enable radio communication with user equipment (50), said method comprising:
determining that an identified radio cell supported by a network access node (20c) meets predetermined criteria to be added to a user equipment (50) active set;
adding said identified radio cell to said user equipment active set; and
instructing preconfiguration of said user equipment (50) and said network access node (20c) supporting said identified radio cell to operate with said identified radio cell as a serving cell;
instructing preconfiguration (S110, S120) of said user equipment (50) and said network access node (20c) supporting said identified radio cell to operate with said identified radio cell as a secondary serving cell.

**2.** A method according to claim 1, comprising:
instructing preconfiguration of a serving network access node (20a) supporting a serving cell of said user equipment (50) to operate as a secondary serving cell.

**3.** A method according to claim 1, comprising:
instructing preconfiguration of all of said plurality of network access nodes to operate as a secondary serving cell.

**4.** A method according to any preceding claim, comprising:
instructing preconfiguration of at least one of said plurality of network access nodes (20a, 20b, 20c) to operate with said identified radio cell as a serving cell.

**5.** A method according to any preceding claim, comprising:
instructing preconfiguration of at least one of said plurality of network access nodes (20a, 20b, 20c) to operate with said identified radio cell as a secondary serving cell.

**6.** A method according to any preceding claim, comprising:
instructing preconfiguration of said user equipment (50) to operate with a predetermined radio cell supported by one of said network access nodes (20a, 20b, 20c) as a secondary serving cell.

**7.** A method according to any preceding claim, comprising:
determining that a target radio cell supported by one of said plurality of network access nodes (20a, 20b, 20c) meets predetermined criteria to be said user equipment (50) serving cell; and
indicating to said target radio cell that it is to commence operation as said user equipment (50) serving cell.

**8.** A computer program product operable, when executed on a computer, to perform the method of any one of claims 1 to 7.

**9.** A network control node (40) operable to configure network nodes (50, 20c, 20b, 20c) to facilitate handover in a multi-point wireless communications network comprising a plurality of network access nodes (20a, 20b, 20c) operable to support radio cells to enable radio communication with user equipment (50), said network control node (40) comprising:
determination logic operable to determine that an identified radio cell supported by a network access node (20c) meets predetermined criteria to be added to a user equipment (50) active set:
active set logic operable to add said identified radio cell to said user equipment active set;
instruction logic operable to instruct preconfiguration of said user equipment (20) and said network access node (20c) supporting said identified radio cell to operate with said identified radio cell as a serving cell and as a secondary serving cell.

**10.** A method of configuring network access nodes (20a, 20b, 20c) to facilitate handover in a multi-point wireless communications network (10) comprising a plurality of network access nodes (20a, 20b, 20c) operable to support radio cells to enable radio communication with user equipment (50), said method comprising;
supporting an identified radio cell identified by a user equipment as meeting predetermined criteria to be added to said user equipment (50) active set; determining that said identified radio cell has been added to said user equipment (50) active set;
receiving an instruction to preconfigure to operate as a serving cell to said user equipment (50); and
receiving an instruction to preconfigure to operate as a secondary serving cell to said user equipment (50).

**11.** A computer program product operable, when executed on a computer, to perform the method of claim 10.

**12.** A network access node (20a, 20b, 20c) operable to configure itself to facilitate handover in a multi-point wireless communications network comprising a plurality of network access nodes (20a, 20b, 20c) operable to support radio cells to enable radio communication with user equipment (50), said network access node comprising:
radio communication logic operable to support an identified radio cell identified by a user equipment (50) as meeting predetermined criteria to be added to said user equipment active set;
determination logic operable to determine that said identified radio cell has been added to said user equipment active set;
reception logic operable to receive an instruction to preconfigure to operate as a serving cell to said user equipment (50); and receive an instruction to preconfigure to operate as a secondary serving cell to said user equipment (50).

**13.** A method of configuring user equipment (50) to facilitate handover in a multi-point wireless communications network comprising a plurality of network access nodes (20a, 20b, 20c) operable to support radio cells to enable radio communication with user equipment (50, said method comprising:
identifying an identified radio cell supported by one of said plurality of network access nodes (20a, 20b, 20c) meets predetermined criteria to be added to said user equipment active set;
adding said identified radio cell to said user equipment active set;
receiving an instruction to preconfigure to operate with said network access node (20c, 20b, 20c) supporting said identified radio cell as a serving cell; and
receiving an instruction to preconfigure to operate with said network access node supporting said identified radio cell as a secondary serving cell.

**14.** A computer program product operable, when executed on a computer, to perform the method of claim 13.

**15.** User equipment (50) operable to configure itself to facilitate handover in a multi-point wireless communications network comprising a plurality of network access nodes (20a, 20b, 20c) operable to support radio cells to enable radio communication with user equipment (50), said user equipment comprising:
measurement logic operable to identify an identified radio cell supported by one of said plurality of network access nodes meets predetermined criteria to be added to said user equipment active set;
active set logic operable to add said identified radio cell to said user equipment active set;
configuration logic operable to receive an instruction to preconfigure to operate with said network access node supporting said identified radio cell as a serving cell and as a secondary serving cell.
